# EUROPEAN PATENT APPLICATION

(11) **EP 0 710 624 A1**
(43) Date of publication of application: **08.05.1996**
(21) Application number: 95307949.8
(22) Date of filing: 07.11.1995
(51) Int. Cl.: C01B 39/00, C01G 45/02

(54) **Sol-gel synthesis of manganese oxide material possessing octahedral structure**

(30) Priority: 07.11.1994 US 19940335323
(71) Applicant: TEXACO DEVELOPMENT CORPORATION, White Plains, New York 10650 (US)
(72) Inventor: O'Young, Chi-Lin, Poughkeepsie, New York 12603 (US); Duan, Niangao, Storrs, Connecticut 06268 (US); Suib, Steven L., Storrs, Connecticut 06268 (US)
(74) Representative: Green, Mark Charles

(57) **Abstract**

A manganese oxide material possessing an octahedral molecular structure is produced by the method which comprises:
a) forming a solution containing permanganate anion;
b) adding an organic reducing agent to the solution to form a gel;
c) recovering the gel; and,
d) heating the gel at a temperature which is effective to produce the manganese oxide material.

Materials produced via this method include layered materials which can be utilized as precursors in the formation of other manganese oxide products and molecular sieves which, due to their high thermal stabilities, can be utilized in high-temperature catalytic applications.

## Description

This invention relates to a method for producing a manganese oxide material possessing an octahedral molecular structure. More particularly, this invention relates to the sol-gel synthesis of such a manganese oxide material which possesses high thermal stability.

Manganese oxide octahedral molecular sieves possessing mono-directional tunnel structures constitute a family of molecular sieves wherein chains of MnO₆ octahedra share edges to form tunnel structures of varying sizes. Such materials have been detected in samples of terrestrial origin and are also found in manganese nodules recovered from the ocean floor. Manganese nodules have been described as useful catalysts in the oxidation of carbon monoxide, methane and butane (U.S. Patent No. 3,214,236), the reduction of nitric oxide with ammonia (Atmospheric Environment, Vol. 6, p.309 (1972)) and the demetallation of topped crude in the presence of hydrogen (Ind. Eng. Chem. Proc. Dev.,Vol. 13, p.315 (1974)).

The hollandites are naturally occurring hydrous manganese oxides with tunnel structures (also described as "framework hydrates") in which Mn can be present as Mn⁴⁺ and other oxidation states, the tunnels can vary in size and configuration and various mono- or divalent cations can be present in the tunnels. The hollandite structure consists of double chains of MnO₆ octahedra which share edges to form (2X2) tunnel structures. The average size of these tunnels is about 4.6Å square. Ba, K, Na and Pb ions are present in the tunnels and coordinated to the oxygens of the double chains. The identity of the tunnel cations determines the mineral species. Specific hollandite species include hollandite (BaMn₈O₁₆), cryptomelane (KMn₈O₁₆), manjiroite (NaMn₈O₁₆) and coronadite (PbMn₈O₁₆).

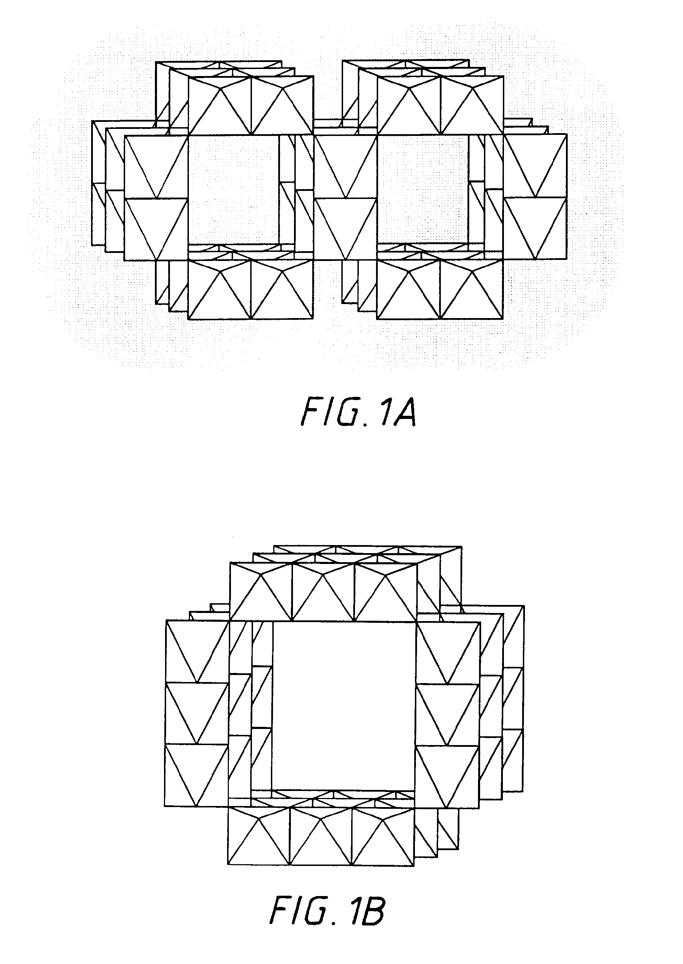

The hydrothermal method of synthesizing a manganese oxide octahedral molecular sieve possessing (2X2) tunnel structures such as those possessed by the naturally-occurring hollandites is described in "Hydrothermal Synthesis of Manganese Oxides with Tunnel Structures," in Synthesis of Microporous Materials, Vol. II, 333, M.L. Occelli, H.E. Robson Eds. Van Nostrand Reinhold, NY, 1992. Such synthetic octahedral molecular sieves having (2X2) tunnel structures are referred to in the art by the designation OMS-2. The (2X2) tunnel structure of OMS-2 is diagrammatically depicted in Fig. 1A.

The hydrothermal method of producing OMS-2 involves autoclaving an aqueous solution of manganese cation and permanganate anion under acidic conditions, i.e., pH<3, at temperatures ranging from 80 to 140°C in the presence of counter cations having ionic diameters of between 2.3 and 4.6Å. The counter cations can serve as templates for the formation of OMS-2 product and can be retained in the tunnel structures thereof. Based on analytical tests, OMS-2 produced via this method is thermally stable up to 600°C.

Alternatively, OMS-2 can be produced by the method disclosed in R. Giovanili and B. Balmer, Chimia, 35 (1981) 53. Thus, when manganese cation and permanganate anion are reacted under basic conditions, i.e., pH>12, a layered manganese oxide precursor is produced. This precursor is ion exchanged and then calcined at high temperatures, i. e., temperatures generally exceeding 600°C, to form OMS-2 product. Analytical tests indicate that OMS-2 produced via this method is thermally stable up to 800°C and the average oxidation state of manganese ion is lower.

The todorokites are naturally occurring manganese oxides with (3X3) tunnel structures formed by triple chains of MnO₆ edge-sharing octahedra. Todorokites and related species are described by Turner et al. in "Todorokites: A New Family of Naturally Occurring Manganese Oxides", Science, Vol. 212, pp. 1024-1026 (1981). The authors speculate that since todorokites are often found in deep-sea manganese nodules containing high concentrations of copper and nickel, it is probable that such metals substitute for Mn⁺² in the octahedral framework.

Todorokites have attracted particular interest because of their relatively large tunnel dimension and their cation-exchange behavior which is similar to that of zeolites (Shen et al., "Manganese Oxide Octahedral Molecular Sieves: Preparation, Characterization, and Applications", Science, Vol. 260, pp. 511-515 (1993)). The naturally occurring todorokites are poorly crystalline, impure in composition and coexist with other manganese oxide minerals. Results of high resolution transmission electron microscopy (HRTEM) show that todorokite contains random intergrowth material of 3x2, 3x3, 3x4 and 3x5 tunnel structure. Because of their disordered structure, the todorokites exhibit variable and non-reproducible catalytic activity, a drawback which militates against their commercial use.

A method of synthesi-zing a manganese oxide octahedral molecular sieve possessing (3X3) tunnel structures such as those possessed by the naturally-occurring todorkites is described in U.S. Patent No. 5,340,562. Such synthetic octahedral molecular sieves having (3X3) tunnel structures are referred to in the art by the designation OMS-1. The (3 x 3) tunnel structure of OMS-1 is diagrammatically depicted in Figure 1 B.

OMS-1 can be prepared by reacting manganese cation and permanganate anion under strongly basic conditions to form a layered manganese oxide precursor, thereafter ageing the precursor at room temperature for at least 8 hours, ion exchanging the aged precursor and then autoclaving the ion-exchanged precursor at from 150 to 180°C for several days. Analytical tests indicate that OMS-1 produced via this method is thermally stable up to about 500°C.

It is important to understand that the manganese oxide structures of the present invention are of a specific type. Manganese oxides can have a variety of structures. According to the literature (Burns, R.G.; Burns, VM. Review in Mineralogy, Amer. Mineral Soc. Chap. 2, Vol. I, 1979) manganese oxides are usually large in number, complex in character, poorly crystalline, intergrown with other phases, disordered and nonstoichiometric. More than 20 manganese oxide phases are known; however, only a few of them have been identified with specific structures.

In accordance with the present invention, a manganese oxide material possessing an octahedral molecular structure is produced by the method which comprises:
a) forming a solution containing permanganate anion;
b) adding an organic reducing agent to the solution to form a gel;
c) recovering the gel substantially free of unreacted reducing agent; and
d) heating the gel at a temperature which is effective to produce the manganese oxide material.

The manganese oxide material produced by the solgel method of this invention can be a layered material, e.g. buserite or birnessite, which can be utilized as a precursor in the formation of OMS-1 and/or OMS-2. Layered materials are crystalline structures in which the atoms are largely concentrated in a set of parallel planes with the regions between the planes comparatively vacant.

Alternatively, the material can be a three-dimensional structure generally referred to in the art as an octahedral molecular sieve. It has been discovered that manganese oxide materials produced via this method possess thermal stabilities of up to 800°C. Thus, an octahedral molecular sieve produced by the sol-gel method herein has been shown to possess significantly higher thermal stability compared to an octahedral molecular sieve produced by the hydrothermal method. Hence, manganese oxide materials produced in accordance with the method herein can be employed in catalytic applications which are carried out at high temperatures, i.e., temperatures above 600°C. In addition to expanding the applicability of manganese oxide materials significantly several other advantages offered by the sol-gel method include the abilities it confers to control resultant phases, to easily incorporate dopants and templating agents, to carry out thin film preparation, to synthesize manganese oxide materials at the molecular scale, to obtain very pure products, to control particle and pore sizes of manganese oxide octahedral molecular sieves and, furthermore, its relatively inexpensive procedures.

The term "OMS" as utilized herein shall be understood to refer to substituted and unsubstituted synthetic manganese oxide octahedral molecular sieves.

In the attached figures
Figs. 1 A and 1 B are diagrammatic representations of the tunnel structures of OMS-2 and OMS-1, respectively;
Fig. 2 presents an x-ray powder diffraction pattern of OMS-2 prepared by the method of this invention;
Fig. 3 presents the thermogravimetric analysis of OMS-2 prepared by the method of this invention; and,
Fig. 4 presents the temperature-programmed desorption of O₂ for OMS-2 prepared by the method of this invention.

To carry out the sol-gel method of this invention, a solution containing permanganate anion is first formed. The solution is preferably formed by dissolving a permanganate salt in an aqueous medium such as distilled deionized water. The permanganate salt is not limited so long as it is soluble in the aqueous medium. In general, the permanganate salt can be an alkali or alkaline earth metal permanganate such as a permanganate of sodium, potassium, cesium, magnesium, calcium, barium or combination thereof. The potassium, cesium and barium permanganates have been found to be particularly useful. The concentration of permanganate anion in the solution is not narrowly critical although permanganate concentrations of 1 M or less are generally preferred with concentrations of 0.35M or less being more preferred.

After dissolution of the permanganate salt, an organic reducing agent is added to the solution-under stirring. The organic reducing agent is likewise not limited so long as it does not interfere with the formation of a gel. Suitable organic reducing agents include, for example, maleic acid, fumaric acid, glutaric acid, phthalic acid, glucose, sucrose, alcohols and combinations thereof. Suitable alcohols include, for example, ethylene glycol, glycerol, polyvinyl alcohol and allyl alcohol. The mole ratio of permanganate anion to organic reducing agent will generally range from 1.5:1 to 4:1, preferably from 2:1 to 3:1, respectively. Upon the addition of the organic reducing agent a sol will almost immediately form. Within a relatively short period of time, e.g., in less than 30 minutes, the sol will start to gel with syneresis taking place. The reaction temperature will generally range from 0 to 60°C and preferably will range from 5 to 30°C.

It is important to eliminate any unreacted reducing agent when recovering the gel. This causes the oxidation state of the final manganese oxide octahedral product to be higher than the oxidation state of a similar material wherein the reducing agent is not eliminated.

The gel can be recovered from the reaction medium by any suitable technique. In general, the gel will be washed with purified water several times and the wash water decanted. The gel can then be subjected to filtration, e.g., in a filter funnel under vacuum, for a suitable period of time at room temperature. Thereafter, the gel is dried, preferably in an oven at 100°C for 10 hours.

The recovered gel product is then heated in air at a temperature ranging from 400 to 900°C to provide the desired manganese-oxide material. Preferably, temperatures ranging from 450 to 800°C are employed. This heating, i.e., calcining, step will generally be carried out for a period of time ranging from 0.1 to 24, preferably from 1 to 6 hours.

It will be-understood by those skilled in the art that dopants and templating agents, e.g., transition metal cations, organic amine cations and inorganic cations can be added to the sol to control the pore structure of the resulting manganese oxide material and/or to substitute the framework and/or tunnel structure thereof with one or more metal cations such as alkali metal, alkaline earth metal and transition metal cations.

Octahedral molecular sieves produced by the method of this invention possess acid sites, including Lewis and Bronsted sites. Applications include catalyzed reactions, e.g., isomerization and polymerization, and adsorption. Specific examples of catalysis and adsorption applications of OMS include the decomposition of alcohol, oxidation of CO, dehydrogenation of hydrocarbons, reduction of NO, hydrogenation of olefins, demetallation of petroleum residua, decomposition of organic sulfur compounds, decomposition of organic nitrogen compounds, decomposition of asphalt, adsorption of noxious gases and adsorption of heavy metal ions.

The following non-limiting examples illustrate specific embodiments of the invention.

### Example 1: Preparation of Potassium Birnessite Layered Manganese Oxide Material by Sol-Gel Technique

A 1.4M solution of glucose was prepared by dissolving 5.0 grams of glucose in 20mL of distilled deionized water in a 125mL Erlenmeyer flask. A 0.38M solution of KMnO₄ was prepared by dissolving 3.0 grams of KMnO₄ in 50mL of distilled deionized water in a 150mL beaker. The purple KMnO₄ solution was added to the colorless glucose solution. An exothermic reaction resulted and upon agitation a homogeneous, red-colored sol was formed. After a few seconds, the sol became brown and within a minute was transformed into a brown gel. The gel was allowed to cool at room temperature for 15-30 minutes before being dried at 110°c. After approximately 24 hours, a sticky brown xerogel was obtained. Calcination of the xerogel at 450°C for 2 hours in an alumina boat in air converted the xerogel to a gray-black ash which was readily ground into a fine black powder. X-ray diffraction analysis of the powder revealed diagnostic peaks for a compound with the potassium birnessite structure. Peak locations and approximate relative intensities were: 7.1Å (100); 3.5Å (50); 2.5Å (10); 2.4Å (20); 2.2Å (10); 2.1Å (10); 1.8Å (10).

If this procedure is carried out using sucrose in place of glucose, a virtually identical reaction ensues and the same potassium birnessite material is obtained. Analogous reactions are also observed if other polyalcohols are employed, e.g., ethylene glycol, glycerol, polyvinyl alcohol, allyl alcohol, etc.

### Example 2: Preparation of K-OMS-2 by Sol-Gel Technique

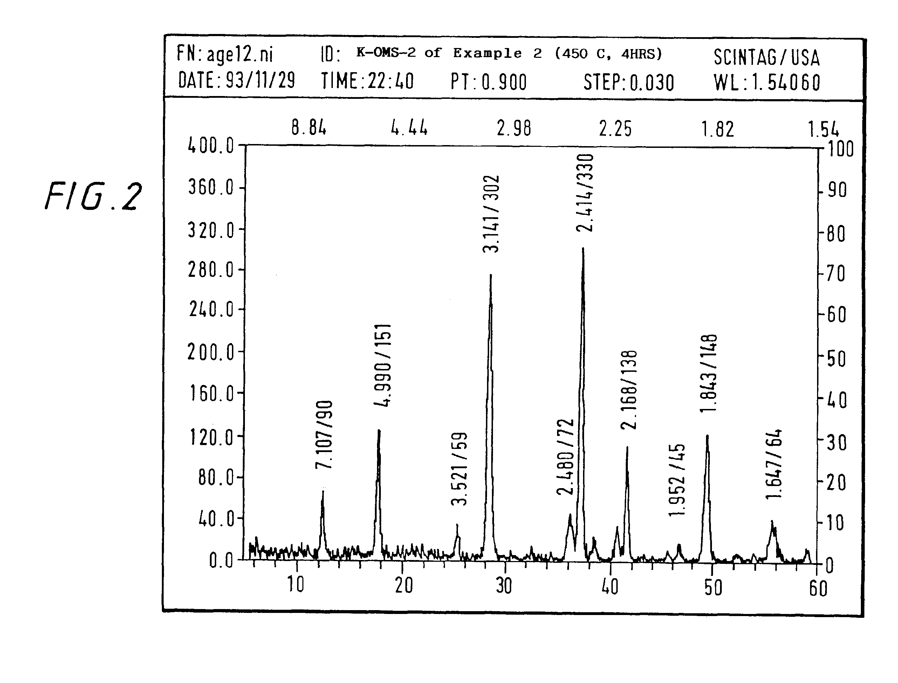

Maleic acid (0.387g) (Pfaltz and Bauer) was added to a 0.1 M solution of 1.5804g KMnO₄ (J. D. Baker) in 100 mL distilled deionized water (DDW). The mixture was stirred for 30 minutes. A dark brown sol was formed at room temperature which started to gel in 5 to 10 minutes with syneresis immediately taking place. The resultant H₂O/gel product was 50% H₂O by volume on top of the gel. The H₂O was decanted. The resultant gel was washed 4 to 5 times with 100 mL portions of DDW and the wash water was decanted. The gel was then transferred to a filter funnel under vacuum (water aspirator) for 20 minutes at room temperature. The gel was heated in air at 100°C in an oven for about 10 hours. The dried gel was then heated in air at 450°C for 4 hours. Table 1 below and Fig. 2 present the x-ray powder diffraction data.

**Table 1.**

| X-Ray Powder Diffraction Data of OMS-2 Prepared By Sol-Gel Technique | |
|---|---|
| d-spacing, Å | Intensity 100 l/lₒ |
| 7.107 | 27.27 |
| 4.990 | 45.76 |
| 3.141 | 91.52 |
| 2.480 | 21.82 |
| 2.414 | 100.00 |
| 2.168 | 41.85 |
| 1.952 | 13.64 |
| 1.842 | 44.85 |
| 1.647 | 19.39 |

The x-ray powder diffraction data presented in Table 1 and Fig. 2 correspond well with the diffraction data for naturally-occurring cryptomellane, i.e., KMn₈O₁₆.

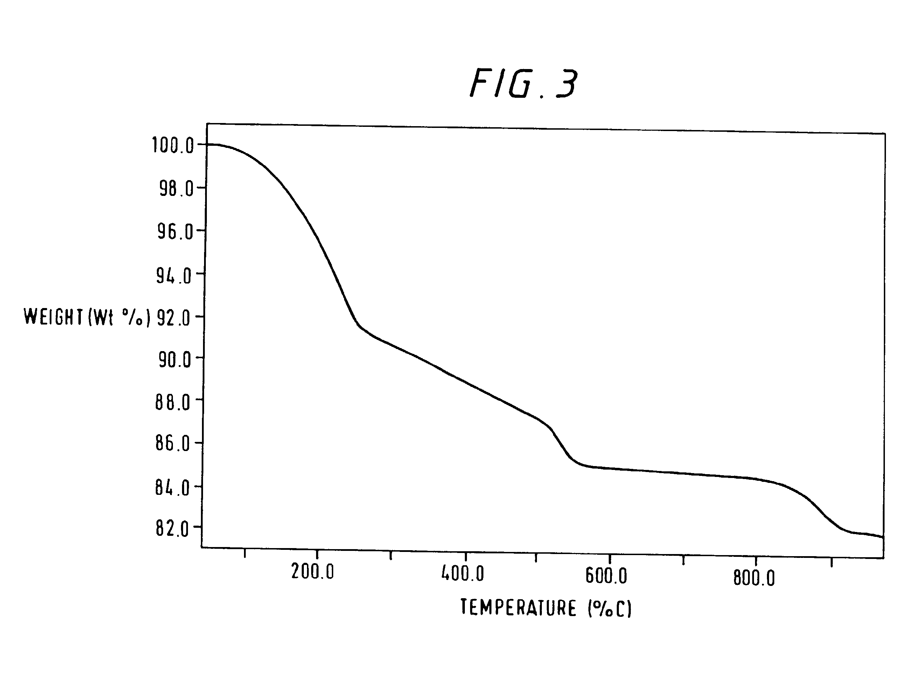

Fig. 3 presents the thermogravimetric analysis (TGA) of OMS-2 gel prepared in Example 2. The weight change between room temperature to 200°C is due to loss of H₂O, from 200 to 500°C to decomposition of the organic acid, at 500 to 550°C to formation of OMS-2 and from 800 to 900°C to oxidation of OMS-2 to bixbyite (cubic Mn₂O₃). Fourier transform infrared data have been used to identify and confirm loss of H₂O and maleic acid. These data demonstrate that octahedral molecular sieves produced in accordance with the method of this invention are thermally stable up to about 800°C.

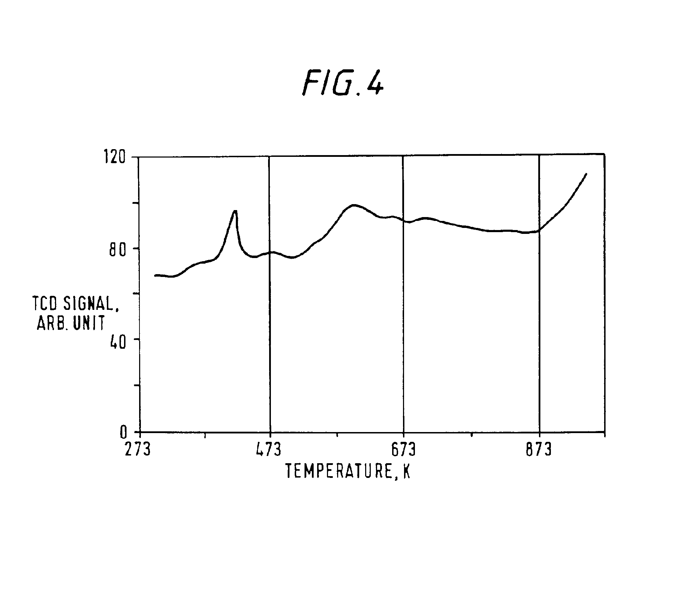

Temperature programmed desorption (TPD) data for O₂ evolved as OMS-2 gel is heated from room temperature to 500°C are shown in Fig. 4. Integration of the TPD data show that only 0.48 atoms of oxygen per 16 atoms in the unit cell are evolved for this material. In contrast, calcined OMS-2 prepared by hydrothermal methods leads to loss of 9.41 atoms of oxygen. The thermal stability of the sol-gel OMS-2 system is clearly superior to the materials prepared by hydrothermal methods.

## Claims

1. A method for producing a manganese oxide material possessing an octahedral molecular structure which comprises:
a) forming a solution containing permanganate anion;
b) adding an organic reducing agent to the solution to form a gel;
c) recovering the gel substantially free of unreacted reducing agent; and
d) heating the gel at a temperature which is effective to produce the manganese oxide material.

2. A method as claimed in Claim 1, wherein the manganese oxide material is a layered material.

3. A method as claimed in Claim 1, wherein the manganese oxide material is a manganese oxide octahedral molecular sieve.

4. A method as claimed in Claim 3, wherein the octahedral molecular sieve is substituted with one or more metal cations selected from alkali metal, alkaline earth metal and transition metal cations.

5. A method as claimed in Claim 3, wherein the manganese oxide material possesses a 2 x 2 tunnel structure.

6. A method as claimed in any preceding Claim, wherein the solution is formed by dissolving a permanganate salt in aqueous medium.

7. A method as claimed in any preceding Claim, wherein the organic reducing agent is selected from maleic acid, fumaric acid, glutaric acid, phthalic acid, glucose, sucrose, alcohols and combinations thereof.

8. A method as claimed in any preceding Claim, wherein the gel is heated to a temperature ranging from 400 to 900°C.
